# NEUE EUROPÄISCHE PATENTSCHRIFT

(11) **EP 0 576 971 B2**
(45) Veröffentlichungstag und Bekanntmachung des Hinweises auf die Entscheidung über den Einspruch: **24.05.2006**
(45) Hinweis auf die Patenterteilung: 08.09.1999
(21) Anmeldenummer: 93109967.5
(22) Anmeldetag: 22.06.1993
(51) Int. Cl.: C08K 3/04, C08K 7/06, C08L 23/10

(54) **Polypropylen-Formmasse zur Herstellung von Formteilen mit dekorativer Oberfläche**
Polypropylene moulding composition for making articles having a decorative surface
Masse à mouler en polypropylène pour la fabrication d'articles à surface décorative

(30) Priorität: 27.06.1992 DE 4221208
(43) Veröffentlichungstag der Anmeldung: 05.01.1994
(73) Patentinhaber: Basell Poliolefine Italia S.r.l., 20124 Milano (IT)
(72) Erfinder: Gübitz, Franz, D-6233 Kelkheim/Ts. (DE)
(74) Vertreter: Reverzani, Cristina

(56) Entgegenhaltungen:
- EP-A- 0 449 685
- JP-A- 55 050 041
- JP-A- 63 012 663
- DATABASE WPIL Section Ch, Week 8343, Derwent Publications Ltd., London, GB; Class A32, AN 83-797898

## Beschreibung

Die Erfindung bezieht sich auf eine Formmasse zur Herstellung von Formteilen, deren Oberfläche einen besonderen, dekorativen Effekt aufweist und die insbesondere Anwendung im Kfz-Innenraum finden.

Kfz-Innenverkleidungsteile, wie Abdeckungen für A-, B-, C-Säulen und dergleichen, werden derzeit meist durch Spritzgießen aus Thermoplasten hergestellt. Bevorzugter Werkstoff ist in neuer Zeit verstärktes, in der Masse eingefärbtes Polypropylen. Aus optischen Gründen sind diese Teile mit einer Oberflächenstruktur versehen. Diese Strukturen werden durch entsprechende Gravuren in den Spritzgießwerkzeugen erzeugt. Das Resultat sind Formteile mit strukturierter, farblich aber homogener Oberflächenbeschaffenheit.

Um höheren Ansprüchen hinsichtlich Optik und Komfort zu genügen, können die Verkleidungsteile lakkiert oder mit Folien oder Textilmaterialien kaschiert werden. Die Kaschierung erfolgt jeweils mit Hilfe von Klebstoffen. Je nach Art des Trägerwerkstoffes ist zur Erzielung einer guten Haftfestigkeit noch eine Vorbehandlung der Formteile durch Abflammen, Coronarentladung oder ähnliches erforderlich. Diese einzelnen Verfahrensschritte bedeuten einen relativ hohen finanziellen Aufwand. Ein weiterer, damit verbundener Nachteil liegt in dem ungünstigen Fogging-Verhalten.

Unter Fogging versteht man die Kondensation von (verdampften) flüchtigen Bestandteilen aus der Kfz-Innenausstattung an den Glasscheiben, insbesondere an der Windschutzscheibe. Die Fogging-Intensität ist naturgemäß abhängig von mehreren Faktoren und von den herrschenden Temperaturbedingungen. Da Klebstoffe häufig relativ hohe Anteile an flüchtigen Substanzen enthalten, stellen klebkaschierte Teile praktisch immer ein deutlich foggingförderndes Potential dar.

Ein weiterer Nachteil kann bei klebkaschierten Teilen hinsichtlich der Gestaltungsfreiheit auftreten. Aufgrund der teilweise nur begrenzten Verformbarkeit der Textilien bzw. Folien während des Kaschiervorganges sind gegebenenfalls Einschränkungen hinsichtlich der geometrischen Ausführung der Trägerteile zu berücksichtigen.

Es bestand daher die Aufgabe, einen Werkstoff zu finden, der durch Spritzgießen zu Formteilen führt, die ein textilähnliches Aussehen aufweisen.

Es ist grundsätzlich möglich, eingefärbtes PP, gegebenenfalls zusätzlich mit Verstärkungsstoffen wie Glasfasern oder Talkum und/oder Elastomeren modifiziert, mit andersfarbigen Fasern zu versehen. Es wurde gefunden, daß thermisch und mechanisch gut beständige Fasern aus z.B. thermoplastischem Polyester, Polyamid oder Polyacrylnitril in einer Menge von ca. 0,5 bis 3 % zum Polypropylen zugemischt und mit dem Polymeren auf Extrudern homogen vermischt werden können.Daraus hergestellte und mit einer genarbten Oberfläche versehene Testplatten zeigten ein textilähnliches Aussehen. Versuche zur Herstellung von großflächigen Formteilen, bei denen geometrisch bedingt lange Fließwege vorhanden sind, waren jedoch unbefriedigend verlaufen. Der Grund waren nicht ausreichende thermische und mechanische Widerstandskraft der Polyester-, Polyamid- oder Polyacrylnitril-Fasern. Die beim Spritzgießen von Polypropylen erforderliche Verarbeitungstemperatur von ca. 230 bis 270°C und die bei Schneckenspritzgießmaschinen während des Homogenisierens und beim Durchströmen von Heißkanälen und dünnen Anschnitten auftretende Materialscherung führten zu einer starken thermischen Schädigung der Fasern. Weiterhin kam es wegen dieser Scherkräfte, in Verbindung mit der hohen Temperatur, teilweise sogar zu einer Auflösung der Faser-Geometrie.

Organische Fasern, wie Wolle oder Baumwolle, zeigten sich hinsichtlich Scherung als widerstandsfähiger. Bei üblicher Verarbeitungstemperatur traten jedoch bereits nach kurzer Verweildauer im Spritzgießaggregat infolge der thermischen Belastung Verfärbungen auf, die bei Produktionsunterbrechungen bis zur Braunfärbung und teilweiser Zersetzung führten.

Es wurde nun gefunden, daß die Aufgabe durch Verwendung von Kohlefasern gelöst werden kann.

Die Verwendung von Kohlfasern zur Verstärkung von Polymeren ist an sich bekannt. Üblicherweise werden Mengen von 10 bis 20% als geschnittene Kohlefasern zu Polymeren zugegeben, um eine markante Erhöhung der mechanischen Eigenschaften (Biegefestigkeit usw.) zu erreichen.

Die Erfindung betrifft somit eine Polypropylen-Formmasse zur Herstellung von Formteilen mit einem dekorativen Effekt enthaltend ein Polymer des Propylens enthaltend 10 bis 20 Gew.-% verstäzkernder Füllstoffe aus der Gruppe Talkum, Kreide, Glasfasern oder Glaskugeln, und 0,3 bis 3 Gew.-% bezogen auf die Formmasse, Kohlenstoff-Fasern mit einer Faserlänge von 0,5 bis 18 mm.

Das Basismaterial für die erfindungsgemäße Formmasse besteht aus
a) 95 bis 50, vorzugsweise 90 bis 70 Gew.% isotaktischem Polypropylen oder Mischpolymerisaten des Propylens mit bis zu 15 Gew.-% Ethylen, mit einem Schmelzindex MFI 230/5 im Bereich von 1 bis 95g/10min,
b) 5 bis 50, vorzugsweise 10 bis 30 Gew.-% kautschukartiger, mit Polypropylen verträglicher Mischpolymerisate und
c) 10 bis 50, vorzugsweise 10 bis 40 Gew.-% verstärkender Füllstoffe aus der Gruppe Talkum, Kreide, Glasfasern oder Glaskugeln.

Vorzugsweise wird ein Homo- oder Copolymer des Propylens mit einem Schmelzindex MFI 230/5 nach DIN 53 735 von 1 bis 95 g/10 min verwendet.

Als kautschukartige Mischpolymerisate eignen sich vor allem amorphe Mischpolymerisate aus 30 bis 70 Gew.-% Ethylen und 70 bis 30 Gew.-% Propylen, Terpolymerisate aus Ethylen, Propylen und bis zu 5 Gew.-% Dienen, vorzugsweise Ethylidennorbornen oder 1.,4-Hexadien, Mischpolymerisate aus Ethylen und 10 bis 45 Gew.-% Vinylacetat oder Blockcopolymere aus Styrol und Butadien oder Styrol und Isopren, die an beiden Molekülenden Polystyrolblöcke besitzen.

Als verstärkende Füllstoffe werden vorzugsweise Talkum, Kreide, Glasfasern oder Glaskugeln eingesetzt.

Als dekoratives Material werden Kohlenstoffasern mit einer Länge von 0,5 bis 18 mm, vorzugsweise 1 bis 6 mm eingesetzt. Die Zugabemenge beträgt 0,5 bis 3 %, vorzugsweise 1 bis 2 %, bezogen auf die gesamte Formmasse.

Die erfindungsgemäße Formmasse kann weiterhin die üblichen, die Verarbeitung erleichternden und die physikalischen Eigenschaften verbessernden Zusatzstoffe enthalten. Als solche sind zu nennen Licht- und Wärmestabilisatoren, Antioxidantien, Antistatika, Gleitmittel, sowie Farbpigmente und Flammschutzmittel. Die erste Gruppe ist in der Formmasse im allgemeinen in einer Menge von 0,01 bis 5 Gew.-%, berechnet auf die Menge Polymer (plus Füllstoff) enthalten. Füllstoffe, Farbpigmente und Flammschutzmittel werden in einer Menge entsprechend den Bedürfnissen eingesetzt.

Die Verarbeitungsbedingungen für die erfindungsgemäße Formmasse entsprechen den Bedingungen, die normalerweise bei der Verarbeitung von Polypropylen angewendet werden. Die Verarbeitungstemperaturen - gemessen unmittlbar nach dem Verlassen der Düse - liegen je nach Größe und Kompliziertheit des Formteils im Bereich von 240 und 280°C. Die Werkzeugtemperatur beträgt im allgemeinen 40 bis 70°C.

Für die Herstellung besonders großflächiger und verarbeitungstechnisch schwieriger Formteile können auch die für solche Artikel besonders hohen Verarbeitungstemperaturen gewählt werden, ohne daß eine Beeinträchtigung von Farbe oder Eigenschaften eintritt.

Man erhält einen optimalen Effekt bei der Verwendung von Polymeren in heller Einfärbung, vorzugsweise Weiß, Grau, Blau oder Braun. Dieser Effekt kann durch eine Oberflächenbehandlung der Formteile noch beeinflußt werden.

Als Verarbeitungsverfahren sind beispielsweise das Spritzgießen, die Extrusion und das Extrusionsblasverfahren geeignet.

Die nachfolgenden Beispiele sollen die Erfindung erläutern:

### Beispiel 1

Es wurde eine Verkleidung einer A-Säule eines europäischen Mittelklasse-Pkw mit einer Länge von 1220 mm, einer Breite von 76 mm und einer Wanddicke von 2,3 mm durch Spritzgießen gefertigt. Das Anspritzen erfolgte mittig über 3 im Abstand von jeweils 12 mm angeordnete Punktanschnitte, Ø 1,5 mm. Um trotz der langen Fließwege eine einwandfreie Füllung des 2fach-Werkzeuges zu erreichen, mußte mit einer Schmelztemperatur von 270 bis 275°C gearbeitet werden. Es wurde eine Spritzgießmaschine mit einer Zuhaltekraft von 1300 kN benutzt. Der Schneckendurchmesser betrug 90 mm. Die am Spritzgießzylinder eingestellten Temperaturen waren (beginnend am Einfülltrichter): 240, 260, 280, 280, 294°C. Gesamtzyklus: 60 Sekunden.

Als Werkstoff wurde ein 20% Talkum enthaltendes PP-Copolymerisat mit einem MFI 230/5 von 55 g/10 min in hellgrauer Grundeinfärbung benutzt, dem 2 % Kohlenstoffasern, Länge 6 mm, 0 22 µm, zugemischt waren. Die gewünschte optische Übereinstimmung der mit einer feinen Narbung versehenen Säulenverkleidung mit dem benachbarten textilkaschierten Dachhimmel wurde in vollem Umfange erreicht. Die geforderte Produktionssicherheit war trotz der erforderlichen relativ hohen Schmelztemperatur vorhanden, auch bei Produktionsunterbrechungen war keine durch den Faserzusatz verursachte Farbverschiebung oder Eigenschaftsveränderung aufgetreten.

### Beispiel 2

Für die Herstellung einer Pkw-Türtasche mit integriertem Lautsprechergrill wurde ein mit 15% Kurzglasfasern verstärktes PP-Copolymerisat mit hellblauer Grundeinfärbung und einem Zusatz von 1 Gew.-% Kohlenstoffasern, Faserlänge 3 mm, Ø 6 µm, benutzt. Wegen der filigranen Gestaltung des Grills und der damit spritzgießtechnisch schwierigen Bedingungen (dünne Stege, lange Fließwege, zahlreiche-Bindenähte) waren Massetemperaturen von größer 265°C erforderlich. Eine Beeinträchtigung der geforderten guten Schlagzähigkeit ist an den Fertigteilen nicht aufgetreten. Auch bei Variation von Verarbeitungstemperatur und -zeit war keine durch die Faser-Zugabe verursachte Farbveränderüng feststellbar.

### Beispiel 3

Für die Herstellung eines Kaffeemaschinengehäuses wurde ein PP-Homopolymerisat mit 10 % Talkum und 1 % Kohlenstoffasern, Faserlänge 1 mm, Ø 8 µm, in hellbrauner Grundeinfärbung benutzt. Das Gehäuse wird einstückig hergestellt, Boden und Deckel sind über Filmscharniere mit dem Zentralteil verbunden. Diese Filmscharniere stellen spritztechnisch deutliche Barrieren dar, deren Überwindung recht schwierig ist. Daher wurde ein Polypropylen mit einem MFI 230/5 von 85 g/10 min. und eine Massetemperatur von 265°C gewählt. Dabei konnte das Werkzeug einwandfrei gefüllt werden. Trotz der relativ hohen Massetemperatur und der an den Engstellen der Filmscharniere auftretenden Materialscherung traten keinerlei Farbänderungen oder Materialschädigungen auf.

### Beispiel 4

Auf einer Extrusionsblasanlage (Schneckendurchmesser 45 mm) wurden Haltegriffe für den Nutzfahrzeug-Innenbereich hergestellt. Als Werkstoff wurde ein hochmolekulares PP-Copolymerisat, MFI 230/5 = 0,5 g/10 min in weißer Grundeinfärbung eingesetzt, dem 0,5 Gew.-% Kohlenstoffasern, Faserlänge 18 mm, Ø 12 µm, zugemischt waren. Die Massetemperatur lag bei 220°C. Verfahrensbedingt waren die Fasern bevorzugt in Längsrichtung (d.h. in Schmelzenausstoßrichtung) orientiert. Diese Orientierung brachte in Verbindung mit einer feinen Oberflächenstruktur einen deutlichen, dekorativen Effekt.

## Patentansprüche

1. Polypropylen-Formmasse zur Herstellung von Formteilen mit einem textilähnlichen Aussehen enthaltend ein Polymer des Propylens enthaltend 10 bis 20 Gew.-% verstärkender Füllstoffe aus der Gruppe Talkum, Kreide, Glasfasern oder Glaskugeln, und 0,3 bis 3 Gew.-%, bezogen auf die Formmasse, Kohlenstoff-Fasern mit einer Faserlänge von 0,5 bis 18 mm.

2. Polypropylen-Formmasse **dadurch gekennzeichnet, dass** sie aus
a) 95 bis 50 Gew.-% isotaktischem Polypropylen oder Mischpolymerisaten des Propylens mit bis zu 10 Gew.-% Äthylen, mit einem Schmelzindex MFI 230/5 im Bereich von 1 bis 95 g/10 min.,
b) 5 bis 50 Gew.-% kautschukartiger, mit Polypropylen verträglicher Mischpolymerisate,
c) 10 bis 50 Gew.-% verstärkender Füllstoffe aus der Gruppe Talkum, Kreide, Glasfasern oder Glaskugeln, und
d) 0,3 bis 3 Gew.-%, bezogen auf a) + b) + c), Kohlenstoff-Fasern mit einer Faserlänge von 0,5 bis 18 mm besteht.

3. Formmasse nach Anspruch 2, **dadurch gekennzeichnet, dass** sie aus
a) 90 bis 70 Gew.-% isotaktischem Polypropylen oder Mischpolymerisaten des Propylens mit bis zu 10 Gew.-% Äthylen, mit einem Schmelzindex MFI 230/5 im Bereich von 1 bis 95 g/10 min.,
b) 10 bis 30 Gew.-% kautschukartiger, mit Polypropylen verträglicher Mischpolymerisate,
c) 10 bis 40 Gew.-% verstärkender Füllstoffe aus der Gruppe Talkum, Kreide, Glasfasern oder Glaskugeln, und
e) 0,3 bis 3 Gew.-%, bezogen auf a) + b) + c), Kohlenstoff-Fasern mit einer Faserlänge von 0,5 bis 18 mm besteht besteht.

4. Formmasse nach Anspruch 1 oder 2, **dädurch gekennzeichnet**, **dass** der verstärkende Füllstoff Talkum ist.

5. Formmasse nach Anspruch 1 oder 2, **dadurch gekennzeichnet, dass** das Polymer des Propylens eine weiße, graue, blaue oder braune Einfärbung besitzt.

## Claims

1. A propylene molding composition for the production of moldings having a textile-like appearance containing a polymer of propylene containing from 10 to 20% by weight of reinforcing fillers from the group consisting of talc, chalk, glass fibers or glass beads and 0.3-3% by weight, based on the molding composition, of carbon fibers having a fiber length of 0.5-18 mm.

2. Propylene molding composition **characterized in that** it comprises:
a) from 95 to 50% by weight of isotactic polypropylene or copolymers of propylene with up to 10% by weight of ethylene, having a melt flow index MFI 230/5 in the range from 1 to 95 g/10 min,
b) from 5 to 50% by weight of rubber-like copolymers which are compatible with polypropylene,
c) from 10 to 50% by weight of reinforcing fillers from the group consisting of talc, chalk, glass fibers or glass beads, and
d) from 0.3 to 3% by weight, based on a) + b) + c), of carbon fibers having a fiber length of from 0.5 to 18 mm.

3. Molding composition according to claim 2, **characterized in that** it comprises:
a) from 90 to 70% by weight of isotactic polypropylene or copolymers of propylene with up to 10% by weight of ethylene, having a melt flow index MFI 230/5 in the range from 1 to 95 g/10 min,
b) from 10 to 30% by weight of rubber-like copolymers which are compatible with polypropylene,
c) from 10 to 40% by weight of reinforcing fillers from the group consisting of talc, chalk, glass fibers or glass beads, and
d) from 0.3 to 3% by weight, based on a) + b) + c), of carbon fibers having a fiber length of from 0.5 to 18 mm.

4. Molding composition according to claim 1 or 2, **characterized in that** the reinforcing filler is talc.

5. Molding composition according to claim 1 or 2, **characterized in that** the polymer of propylene has a white, gray, blue or brown coloration.

## Revendications

1. Masse de moulage en polypropylène pour la fabrication de pièces ayant un aspect de type textile, contenant un polymère du propylène contenant 10-20% en poids de substances de remplissage renforçatrices du groupe du talc, de la craie, des fibres de verre ou des perles de verre, et de 0,3 à 3% en poids, par rapport à la masse de moulage, de fibres de carbone ayant une longueur de fibre de 0,5 à 18 mm.

2. Masse de moulage en polypropylène **caractérisée en ce qu'**elle est constituée
a) de 95 à 50% en poids de polypropylène isotactique ou de copolymères du propylène avec jusqu'à 10% en poids d'éthylène, présentant un indice de fusion MFI 230/5 dans la gamme de 1 à 95 g/10 minutes,
b) de 5 à 50% en poids de copolymères de type caoutchouc, compatibles avec du polypropylène,
c) de 10 à 50% en poids de substances de remplissage renforçatrices du groupe du talc, de la craie, des fibres de verre ou des perles de verre, et
d) de 0,3 à 3% en poids, par rapport à a) + b) + c), de fibres de carbone ayant une longueur de fibre de 0,5 à 18 mm.

3. Masse de moulage suivant la revendication 2, **caractérisée en ce qu'**elle est constituée
a) de 90 à 70% en poids de polypropylène isotactique ou de copolymères du propylène avec jusqu'à 10% en poids d'éthylène, présentant un indice de fusion MFI 230/5 dans la gamme de 1 à 95 g/10 minutes,
b) de 10 à 30% en poids de copolymères de type caoutchouc, compatibles avec du polypropylène,
c) de 10 à 40% en poids de substances de remplissage renforçatrices du groupe du talc, de la craie, des fibres de verre ou des perles de verre, et
d) de 0,3 à 3% en poids, par rapport à a) + b) + c), de fibres de carbone ayant une longueur de fibre de 0,5 à 18 mm.

4. Masse de moulage suivant la revendication 1 ou 2, **caractérisée en ce que** la substance de remplissage renforçatrice est du talc.

5. Masse de moulage suivant la revendication 1 ou 2, **caractérisée en ce que** le polymère du propylène possède une teinte blanche, grise, bleue ou brune.
